# EUROPÄISCHE PATENTSCHRIFT

(11) **EP 1 366 727 B1**
(45) Veröffentlichungstag und Bekanntmachung des Hinweises auf die Patenterteilung: **20.09.2006**
(21) Anmeldenummer: 03011669.3
(22) Anmeldetag: 23.05.2003
(51) Int. Cl.: A61C 13/20, A61C 5/10, B22C 1/00, B22C 9/04

(54) **Herstellung von quarzfreier Einbettmasse und Anwendung**
Preparation and use of quartz free investment material
Préparation et utilisation d'une masse de moulage sans quartz

(30) Priorität: 29.05.2002 DE 10223883
(43) Veröffentlichungstag der Anmeldung: 03.12.2003
(73) Patentinhaber: BEGO Bremer Goldschlägerei Wilh. Herbst GmbH & Co. KG, 28359 Bremen (DE)
(72) Erfinder: Weiss, Joachim, 28355 Bremen (DE)
(74) Vertreter: Eisenführ, Speiser & Partner

(56) Entgegenhaltungen:
- EP-A- 0 916 430
- WO-A-02/38075
- DE-A- 10 110 687
- DE-A- 19 649 306
- DE-C- 19 641 348

## Beschreibung

Die vorliegende Erfindung betrifft ein Verfahren zur Herstellung zahntechnischer Gussteile.

Zur Herstellung zahntechnischer Gussteile wie z. B. Kronen und Brücken oder Modellgussprothesen wird eine feuerfeste Einbettmasse benötigt, deren Expansionswerte die jeweilige Kontraktion der verwendeten Legierung ausgleichen, um im Munde des Patienten einen passgenauen Zahnersatz eingliedern zu können. Bei der Herstellung von Kronen und Brücken wird regelmäßig von einem Zahnarzt ein Abdruck der präparierten Zahnstümpfe hergestellt. Der erhaltene Abdruck wird dann üblicherweise in einem Dentallabor zur Herstellung eines ersten Positivmodells mit einem aushärtbaren Material ausgegossen. Auf dem resultierenden (ersten) Positivmodell modelliert der Zahntechniker aus einem Modellierwerkstoff (z. B. Wachs oder ein niedrigschmelzender Kunststoff) eine Restauration (Gussobjekt). Das Restaurationsmodell wird anschließend vom (ersten) Positiv abgehoben und in eine Einbettmasse eingebettet. Nach Aushärten (Abbinden) der Einbettmasse wird der Modellierwerkstoff ausgeschmolzen, so dass nun eine Hohlform zum Gießen des zahntechnischen Gussteils gebildet wird, welches regelmäßig als Ersatz für einen fehlenden Teil eines Zahnes oder Gebisses vorgesehen ist.

Bei der Herstellung von Modellgussprothesen (Modellgusstechnik) wird von einem Zahnarzt ebenfalls ein Abdruck über das sanierte Restgebiss genommen. Dieser wird in einem Dentallabor zur Herstellung eines ersten Positivmodells mit einem aushärtbaren Material ausgegossen. Von diesem ersten Positivmodell wird mit einem Dublierwerkstoff (z.B. Hydrogel, Silikon oder Polyether) ein Negativ erstellt, dieses mit einer Einbettmasse ausgegossen und damit ein neues, etwas vergrößertes Positivmodell (zweites Positivmodell) erstellt. Auf diesem modelliert der Zahntechniker in Wachs oder Kunststoff den geplanten Zahnersatz. Dieses Arbeitsmodell wird anschließend in einer vorgegebenen Form mit feuerfester Einbettmasse ummantelt. Durch Ausbrennen des Modelliermaterials in einem Vorwärmofen entsteht eine Hohlform, in die das verflüssigte Metall geschleudert bzw. durch Druck gefüllt wird.

Bislang werden als Materialien zur Herstellung des (ersten) Positivs üblicherweise Formulierungen auf Gipsbasis eingesetzt, wobei gemäß der DE 196 41 348 C1 lediglich eine Abbindeexpansion im Bereich zwischen etwa 0,2 und 0,06 Vol.% auftritt, abhängig von der genauen Zusammensetzung des im Wesentlichen aus Gips bestehenden Materials.

Als Einbettmasse werden regelmäßig Zusammensetzungen eingesetzt, welche als Basismaterial einen hohen Anteil an Quarz bzw. seinen Modifikationen (Tridymit; Cristobalit) umfassen; neben dem Basismaterial umfasst die Einbettmasse regelmäßig Bindemittel sowie ggf. Additive zur Einstellung des Expansionsverhaltens und weiterer Eigenschaften der Einbettmasse. Gemäß der DE 196 41 348 C1 weisen handelsübliche Einbettmassen eine Expansion zwischen etwa 0,5 und 3,5 Vol.% auf, wobei diese Expansion durch die Konzentration der verwendeten Anmischflüssigkeit gesteuert werden kann. Zur Einstellung der Konzentration wird der Anmischflüssigkeit destilliertes Wasser zugesetzt oder die Menge der Anmischflüssigkeit variiert. In besonderen Fällen kann die Expansion auch durch das Durchlaufen definierter Temperaturprogramme gesteuert werden.

Zum Erreichen einer optimalen Passgenauigkeit des in der Hohlform unter Kontraktion erstarrten Dentalmetalls (Dentallegierung) wurde von den Herstellern bislang versucht, das Expansionsverhalten des Einbettmaterials durch Variation seiner chemischen Zusammensetzung zu steuern.

In der EP 0916430 A1 ist ein Verfahren zur Steuerung und Einstellung der Expansion von keramischen Einbettmassen sowie die Verwendung einer verfahrensgemäßen Einbettmasse beschrieben. Die Einbettmasse ist dabei quarzfrei.

Bei Verwendung von Quarz und seinen Modifikationen Cristobalit bzw. Tridymit besteht jedoch insbesondere bei langjähriger ungeschützter Exposition in einem Dentallabor das Risiko des Erwerbs von Silikose oder sogar Lungenkrebs. Es war daher die Aufgabe der vorliegenden Erfindung, ein Verfahren zur Herstellung eines zahntechnischen Gussteils anzugeben, bei dem eine zumindest im Wesentlichen quarzfreie Einbettmasse Verwendung findet. Der Begriff "quarzfrei" bedeutet dabei im Rahmen des vorliegenden Textes "frei von Quarz und seinen Modifikationen Cristobalit, Tridymit und Quarzglas". Das anzugebende Verfahren sollte dabei zahntechnische Gussteile zur Verfügung stellen, welche in ihrer Passgenauigkeit den auf herkömmliche Weise hergestellten Gussteilen entsprechen oder zumindest noch für die Weiterverarbeitung zu einem passgenauen Produkt einsetzbar sind.

Erfindungsgemäß wird die gestellte Aufgabe gelöst durch ein Verfahren zur Herstellung eines zahntechnischen Gussteils, mit folgenden Schritten:
a.) Formen und Aushärten eines ersten Positivmodells eines Gebisses,
b.) Modellation einer Restauration aus einem Modellierwerkstoff auf dem ersten Positivmodell oder einem zweiten Positivmodell, das dem ersten Positivmodell in seinen Abmessungen zumindest im Wesentlichen identisch ist,
c.) Einbetten des Restaurationsmodells in eine zumindest im Wesentlichen quarzfreie aushärtbare Einbettmasse,
d.) Aushärten der Einbettmasse
e.) Entfernen des Restaurationsmodells aus der Einbettmasse, so dass eine Hohlform gebildet wird,
f.) Einbringen flüssigen Metalls in die Hohlform und Erstarrenlassen des Metalls in der Hohlform.
g.) Ausbetten des zum zahntechnischen Gussteil erstarrten Metalls
wobei das zur Herstellung des Positivmodells eingesetzte Material so ausgewählt ist, dass es während des Aushärtens um mindestens 0,25 Vol.% expandiert.

Der Fachmann unterscheidet in der Praxis bestimmte Herstellungsverfahren für zahntechnische Gussteile und benennt diese Verfahren üblicherweise als "Kronen- und Brückentechnik", "Modellgusstechnik", "Modellguss-Abhebetechnik" usw.. Bevorzugte Gestaltungen für die drei speziell genannten Verfahren sind nachfolgend angegeben.

### Kronen- und Brückentechnik:

- Formen und Aushärten eines (ersten) Positivmodells eines Gebisses, derart, dass das zur Herstellung des Positivmodells eingesetzte Material während des Aushärtens expandiert (z.B. kann als Material hochexpandierender Gips eingesetzt werden). Anmerkung: Dabei ist es regelmäßig entweder möglich, das Expansionsverhalten des Modellmaterials unter Verwendung einer Anmischflüssigkeit oder unter Verwendung eines nicht flüssigen Expansionsmittels zu steuern. Alternativ werden Modellmaterialen mit jeweils unterschiedlichen, dem Anwendungszweck angepassten verschiedenen Expansionsstufen angeboten, so das eine weitere Steuerung des Expansionsverhaltens entfallen kann.
- Modellation einer Restauration (Modell des herzustellenden Gussteils) aus einem (schmelzbaren) Modellierwerkstoff (z. B. Wachs oder ein niedrigschmelzender Kunststoff) auf dem (ausgehärteten und gegenüber dem Originalgebiss vergrößerten ersten) Positiv,
- Einbetten des (vom Positiv zuvor abgenommenen) Restaurationsmodells (z. B. Wachs- oder Kunststoffmodell) in eine zumindest im Wesentlichen quarzfreie, aushärtbare Einbettmasse (ein Anteil von 1 Gew.% an Quarz oder seinen Modifikation wird hierbei noch als im Wesentlichen quarzfrei aufgefasst),
- Aushärten (Abbinden) der Einbettmasse,
- Entfernen des Restaurationsmodells aus der Einbettmasse, so dass eine Hohlform gebildet wird (in der Regel wird das Restaurationsmodell durch Ausschmelzen aus der Hohlform entfernt),
- Einbringen (üblicherweise Eingießen) flüssigen Metalls in die Hohlform und Erstarrenlassen des Metalls in der Hohlform.

### Modellgußtechnik:

- Formen und Aushärten eines (ersten) Positivmodells eines Gebisses, derart, dass das zur Herstellung des Positivmodells eingesetzte Material während des Aushärtens expandiert (z.B. kann als Material hochexpandierender Gips eingesetzt werden). Anmerkung: Die Anmerkung zur "Kronen- und Brückentechnik" gilt hier entsprechend.
- Dublieren des überdimensionierten Modells mit Hilfe geeigneter Dubliermaterialien (z.B. Hydrogel, Silikon oder Polyether); Erhalt eines (zweiten) Positivmodells,
- Modellation einer Restauration (Modell des herzustellenden Gussteils) aus einem (schmelzbaren) Modellierwerkstoff (z. B. Wachs oder ein niedrigschmelzender Kunststoff) auf dem (ausgehärteten und gegenüber dem Originalgebiss vergrößerten zweiten) Positivmodell aus einer zumindest im Wesentlichen quarzfreien, aushärtbaren Einbettmasse (ein Anteil von 1 Gew.% an Quarz oder seinen Modifikation wird hierbei noch als im Wesentlichen quarzfrei aufgefasst).
- Einbetten des Restaurationsmodells (z. B. Wachs- oder Kunststoffmodell) und des dieses tragenden Einbettmassemodells (zweites Positiv) in eine zumindest im Wesentlichen quarzfreie, aushärtbare Einbettmasse (ein Anteil von 1 Gew.% an Quarz oder seinen Modifikation wird hierbei noch als im Wesentlichen quarzfrei aufgefasst),
- Aushärten (Abbinden) der Einbettmasse,
- Entfernen des Restaurationsmodells aus der Einbettmasse, so dass eine Hohlform gebildet wird (in der Regel wird das Restaurationsmodell durch Ausschmelzen aus der Hohlform entfernt),
- Einbringen (üblicherweise Eingießen) flüssigen Metalls in die Hohlform und Erstarrenlassen des Metalls in der Hohlform.

Das erfindungsgemäße Verfahren wird vorzugsweise so gestaltet, dass das erstarrte Metall zu einer eingliederbaren Restauration weiterverarbeitet wird.

Alternativ ist in manchen Fällen das Verfahren der Modellguß-Abhebetechnik, (insbesondere mit lichthärtendem Modellierwerkstoff) zu bevorzugen. In diesem Fall wird die Restauration mittels eines aushärtbaren Materials (z.B. Wachs, Kunststoff) auf dem ersten Positiv aus Modellmaterial vorgenommen. Die Restauration wird dann analog der Vorgehensweise in der Kronen- und Brückentechnik von dem Modell abgehoben und eingebettet. Nach Aushärten (Abbinden) der Einbettmasse wird der Modellierwerkstoff ausgeschmolzen, so dass nun eine Hohlform zum Gießen des zahntechnischen Gussteils gebildet wird, welches regelmäßig als Ersatz für einen fehlenden Teil eines Zahnes oder Gebisses vorgesehen ist.

Als flüssiges Metall können hierbei insbesondere übliche Dentallegierungen eingesetzt werden.

Die Erfindung beruht dabei auf der Erkenntnis, dass die Herstellung technischer Gussteile mit bereits akzeptabler Passgenauigkeit auch unter Verwendung von zumindest im Wesentlichen quarzfreien Einbettmassen möglich ist, wenn das zur Herstellung des (ersten) Positivs eingesetzte Material während des Aushärtens (Abbindens) ausreichend expandiert.

Zur optimalen Gestaltung des Prozesses wird die Materialkombination aus Modellmaterial und Einbettmasse vorzugsweise so aufeinander abgestimmt, dass mit der Expansion beider Materialien gerade die Kontraktion der Legierung während deren Abkühlung kompensiert wird.

Während bei den herkömmlichen Systemen zur Herstellung eines zahntechnischen Gussteils der unvermeidlichen Kontraktion des Metalls durch eine entsprechende Expansion der Einbettmasse begegnet wurde, welche wesentlich durch die besondere thermische Expansionsfähigkeit des Quarzes und seiner Modifikationen bestimmt ist, wird mit der vorliegenden Erfindung ein anderer Weg beschritten. Da die verwendete Einbettmasse nämlich im Wesentlichen quarzfrei ist, weist sie regelmäßig ein geringeres Expansionsvermögen als marktübliche Einbettmassen auf. Einem Anteil der Kontraktion des Metalls wird deshalb erfindungsgemäß durch Einsatz eines Materials zur Herstellung des (ersten) Positivs entsprochen, welches während des Aushärtens (Abbindens) in beträchtlichem Maße, nämlich um mindestens 0,25 Vol.% expandiert. Das Ausmaß der Expansion des genannten Materials ist dabei regelmäßig größer als das Ausmaß der Expansion bei den bisher üblichen Materialien für Positivmodelle (wie z. B. Materialien auf Gipsbasis).

Das im erfindungsgemäßen Verfahren zunächst hergestellte (erste) Positiv ist somit gegenüber der Original-Dentaltopografie vergrößert. Aufgrund der Volumenkontraktion des Dentalmetalls ist das fertige Gussteil jedoch wieder gegenüber dem (ersten) Positiv verkleinert, und der Fachmann ist anhand einfacher Versuche in der Lage, eine Werkstoffpaarung aus
(1) dem Material zur Herstellung des (ersten) Positivs und
(2) dem Dentalmetall
auszuwählen, bei der sich die Volumenexpansion des Positivmaterials einerseits und die Volumenkontraktion des flüssigen Dentalmetalls andererseits zumindest im Wesentlichen kompensieren.

Die Einbettmasse kann dabei durchaus noch ein eigenes Expansionsvermögen besitzen (z. B. einer Abbindeexpansion unterliegen), was dann allerdings bei der Materialauswahl und/oder bei der Steuerung des Expansionsverhaltens zu berücksichtigen ist.

Einbettmassen, welche zur Verwendung im erfindungsgemäßen Verfahren besonders geeignet sind, umfassen neben feuerfesten keramischen Materialien (wie z. B. Oxiden, Silikaten etc.) ein geeignetes Bindersystem (wie z. B. Ammoniumdihydrogenphosphat/Magnesiumoxid oder Magnesiumacetat oder dergleichen). Der Fachmann wird anhand einfacher Versuche geeignete quarzfreie Einbettmassen auswählen, welche mehrere der folgenden Eigenschaften besitzen:
- gute plastische Verarbeitbarkeit und kontrollierte Erstarrung zu einem festen Formkörper;
- hohe thermische Beständigkeit bei der Gießtemperatur (abhängig vom ausgewählten Gießmetall) und beim Löten oder Sintern;
- eine dem Anwendungszweck angepasste geringe Verarbeitungszeit: wenige Sekunden bei Löteinbettmassen; bis zu einigen Minuten bei Gusseinbettmassen;
- leichte Ausbettbarkeit des erstarrten Gussstücks;
- Hochtemperatur-Korrosionsbeständigkeit gegenüber der Schmelze des Dentalmetalls (Dentallegierung);
- hohe Festigkeit, um dem Druck beim Guss standzuhalten;
- präzise Abformgenauigkeit für feine Details;
- einstellbares (steuerbares) Expansionsverhalten;
- ausreichende Polporosität, um Luft und Gase entweichen zu lassen;
- Temperaturwechselbeständigkeit;
- Lagerbeständigkeit

Das Einbettmaterial kann zur Reduzierung des Verzugs beim Einfüllen des flüssigen Metalls Verstärkungseinlagerungen umfassen, wie sie in der DE 198 08 027 A1 beschrieben sind.

Bevorzugte Ausgestaltungen des erfindungsgemäßen Verfahrens sind den Unteransprüchen und den nachfolgenden Beispielen zu entnehmen.

### Beispiel 1: Quarzfreie Einbettmasse

Es wurde eine (quarzfreie) Einbettmasse der folgenden Zusammensetzung hergestellt:

| **Substanz** | **Anteil an Einbettmasse in Gew.-%** |
|---|---|
| Aluminiumoxid | 25 |
| Dimagnesiumphosphat | 3,4 |
| Magnesiumoxid | 7,5 |
| Ammoniumdihydrogenphosphat | 9 |
| Netzmittel | 0,1 |
| Nephelinsyenit | 40 |
| Zirkoniumsilikat | 15 |

### Beispiel 2: Alternative (quarzfreie) Einbettmasse

Es wurde eine weitere (quarzfreie) Einbettmasse mit der folgenden Zusammensetzung hergestellt:

| **Substanz** | **Anteil an Einbettmasse in Gew.-%** |
|---|---|
| Dimagnesiumphosphat | 3,4 |
| Magnesiumoxid | 7,5 |
| Ammoniumdihydrogenphosphat | 9 |
| Netzmittel | 0,1 |
| Nephelinsyenit | 65 |
| Zirkoniumsilikat | 15 |

### Anmerkung zu den Beispielen 1 und 2:

Als Anmischflüssigkeit für die (quarzfreien) Einbettmassen gemäß den Beispielen 1 und 2 kann z.B. Kieselsol oder ein anderes Sol (wie z.B. Zirkonsol) eingesetzt werden.

Zu den Beispielen 1 und 2 alternative Zusammensetzungen können Magnesium in (weitaus) höherer Konzentration enthalten.

Neben den genannten Oxiden können auch andere anorganische Oxide in erfindungsgemäß einzusetzenden (quarzfreien) Einbettmassen enthalten sein.

Alternativ zu den Zusammensetzungen gemäß den Beispielen 1 und 2 können auch Formulierungen mit den folgenden Hauptbestandteilen verwendet werden: Magnesiumoxid, Yttriumoxid, Ceroxid und Aluminiumoxid.

Diese Hauptbestandteile sind die Basis sogenannter Titangusseinbettmassen; die in den erfindungsgemäßen Verfahren einsetzbaren Einbettmassen dieses Typs können mit gelöstem Magnesiumacetat (gegebenenfalls mit Zusätzen) als Anmischflüssigkeit verwendet werden.

## Patentansprüche

1. Verfahren zur Herstellung eines zahntechnischen Gussteils, mit folgenden Schritten:
a.) Formen und Aushärten eines ersten Positivmodells eines Gebisses,
b.) Modellation einer Restauration aus einem Modellierwerkstoff auf dem ersten Positivmodell oder einem zweiten Positivmodell, das dem ersten Positivmodell in seinen Abmessungen zumindest im Wesentlichen identisch ist,
c.) Einbetten des Restaurationsmodells in eine zumindest im Wesentlichen quarzfreie aushärtbare Einbettmasse,
d.) Aushärten der Einbettmasse
e.) Entfernen des Restaurationsmodells aus der Einbettmasse, so dass eine Hohlform gebildet wird,
f.) Einbringen flüssigen Metalls in die Hohlform und Erstarrenlassen des Metalls in der Hohlform.
g.) Ausbetten des zum zahntechnischen Gussteil erstarrten Metalls,
**dadurch gekennzeichnet, dass** das zur Herstellung des Positivmodells eingesetzte Material so ausgewählt ist, dass es während des Aushärtens um mindestens 0,25 Vol.% expandiert.

2. Verfahren nach Anspruch 1, wobei das erstarrte Metall zu einer eingliederbaren Restauration weiterverarbeitet wird.

3. Verfahren nach Anspruch 1 oder 2, wobei das gemäß Schritt a.) hergestellte erste Positivmodell vor Durchführung des Schrittes b.) zu einem zweiten Positivmodell dubiert wird, wobei das zur Herstellung des zweiten Positivmodells eingesetzte Material eine zumindest im Wesentlichen quarzfreie aushärtbare Masse ist,
und wobei die Modellation gemäß Schritt b.) auf dem zweiten Positivmodell durchgeführt wird.

## Claims

1. A method for fabricating a dental casting, comprising the following steps:
a.) forming and hardening a first positive model of a dentition,
b.) modelling a restoration from a modelling material on the first positive model or a second positive model which is at least substantially identical in its dimensions to the first positive model,
c.) investing the restoration model in an at least substantially quartz-free hardenable investment material,
d.) hardening the investment material
e.) removing the restoration model from the investment material, so that a hollow mould is formed,
f.) introducing liquid metal into the hollow mould and allowing the metal to solidify in the hollow mould.
g.) removing the metal, which has solidified to form the dental casting, from the investment,
**characterised in that** the material used to fabricate the positive model is selected such that it expands by at least 0.25 vol.% during hardening.

2. A method according to Claim 1, wherein the solidified metal is further processed to produce a restoration which may be fitted.

3. A method according to Claim 1 or 2, wherein the first positive model fabricated according to step a.) is duplicated to produce a second positive model, wherein the material used to fabricate the second positive model is an at least substantially quartz-free hardenable compound,
and wherein the modelling according to step b.) is carried out on the second positive model.

## Revendications

1. Procédé de fabrication d'une pièce moulée de dentisterie, comprenant les étapes suivantes consistant à :
a.) former et durcir un premier modèle positif d'une denture,
b.) modeler une restauration à partir d'un matériau de modelage sur un premier modèle positif ou un deuxième modèle positif, qui est au moins sensiblement identique au premier modèle positif dans ses dimensions,
c.) incorporer le modèle de restauration dans une masse d'enrobage durcissable au moins sensiblement dépourvue de quartz,
d.) durcir la masse d'enrobage,
e.) retirer le modèle de restauration de la masse d'enrobage pour former une forme creuse,
f.) introduire un métal liquide dans la forme creuse et laisser solidifier le métal dans la forme creuse,
g.) désencastrer le métal qui s'est solidifié en une pièce moulée de dentisterie,
**caractérisé en ce que** la matière mise en oeuvre pour la fabrication du modèle positif est choisie de sorte qu'elle se dilate d'au moins 0,25 % en volume pendant le durcissement.

2. Procédé selon la revendication 1, dans lequel le métal solidifié est retransformé en une restauration insérable.

3. Procédé selon la revendication 1 ou 2, dans lequel le premier modèle positif fabriqué d'après l'étape a.) est doublé en un deuxième modèle positif avant réalisation de l'étape b.), la matière utilisée pour la fabrication du deuxième modèle positif étant une masse durcissable au moins sensiblement dépourvue de quartz,
et dans lequel le modelage d'après l'étape b.) est réalisé sur le deuxième modèle positif.
